# EUROPÄISCHE PATENTSCHRIFT

(11) **EP 1 295 025 B1**
(45) Veröffentlichungstag und Bekanntmachung des Hinweises auf die Patenterteilung: **12.10.2005**
(21) Anmeldenummer: 01960294.5
(22) Anmeldetag: 09.06.2001
(51) Int. Cl.: F02M 37/22, F02M 37/00

(54) **FLÜSSIGKEITSKREISLAUF**
HYDRAULIC CIRCUIT
CIRCUIT HYDRAULIQUE

(30) Priorität: 27.06.2000 DE 10030324
(43) Veröffentlichungstag der Anmeldung: 26.03.2003
(73) Patentinhaber: Mann + Hummel GmbH, 71638 Ludwigsburg (DE)
(72) Erfinder: RöSGEN, André, D-73630 Remshalden (DE)
(74) Vertreter: Voth, Gerhard
(86) Internationale Anmeldenummer: PCT/EP2001/006548
(87) Internationale Veröffentlichungsnummer: WO 2002/001061

(56) Entgegenhaltungen:
- EP-A- 0 819 458
- EP-A- 0 833 050
- EP-A- 0 887 542
- EP-A- 0 984 157
- EP-A- 1 058 000
- DE-A- 19 926 172

## Beschreibung

Die Erfindung betrifft einen Flüssigkeitskreislauf nach dem Oberbegriff des Patentanspruches 1.

Es ist aus der DE 197 14 488 ein Verfahren und eine Kraftstoffeinspritzanlage zur Erwärmung von Kraftstoff bekannt. Bei dem Verfahren zur Erwärmung von Kraftstoff wird der Kraftstoff durch eine Kraftstoffpumpe auf einen, zur Einspritzung erforderlichen Einspritzdruck verdichtet. Ein Teil des verdichteten Kraftstoffes wird über einen Kraftstofffilter einer Brennkraftmaschine zugeführt, wo er von Einspritzventilen eingespritzt wird. Der nicht eingespritzte Kraftstoff wird über ein Ventil oder eine Leckageleitung entspannt und zumindest teilweise der Kraftstoffpumpe erneut zugeführt. Das Ventil öffnet, sobald der Kraftstoff eine Kraftstofftemperatur unterhalb einer Mindesttemperatur aufweist.

Zur Durchführung dieses Verfahrens, besitzt die Kraftstoffeinspritzanlage eine Kraftstoffzuleitung, welche mit einem Kraftstofftank verbunden ist, wobei eine Kraftstoffpumpe zur Förderung des Kraftstoffes aus dem Tank in die Kraftstoffleitung, in welcher ein Kraftstofffilter zur Reinigung des Kraftstoffes angeordnet ist, vorgesehen ist. Die Kraftstoffleitung ist mit einem Einspritzventil einer Brennkraftmaschine verbunden. An der Kraftstoffleitung ist ein Ventil vorgesehen, welches über eine Rückleitung mit der Kraftstoffzuleitung verbunden ist. Das Ventil öffnet abhängig von vorgegebenen Betriebszuständen. Hierzu ist das Ventil als Thermostatventil ausgeführt, welches automatisch die Rückleitung des Kraftstoffes mit der Kraftstoffzuleitung verbindet, wenn die Kraftstofftemperatur unterhalb einer Mindesttemperatur liegt. Die Rückleitung ist derart mit der Kraftstoffzuleitung gekoppelt, dass sich der erwärmte Kraftstoff mit dem kalten Kraftstoff aus dem Tank vermischt, wobei die Vermischung in einer Mischkammer erfolgen kann.

Die Kraftstoffeinsprizanlage weist jedoch eine Vielzahl an Leitungen auf, welche Ventile und Thermostate mit einer zentralen Verarbeitungseinheit verbinden. Außerdem müssen zahlreiche Kraftstoffleitungen mit den Bauteilen verbunden werden.

Hierbei besteht bei der Montage der Kraftstoffeinspritzanlage an eine Brennkraftmaschine ein erheblicher Montageaufwand und die Gefahr der Verwechslung verschiedener Leitungen miteinander.

Ein Flüssigkeißkreislauf nach dem Oberbegriff des Anpruchs 1 ist aus EP 0 833 050 A bekannt.

Aufgabe der Erfindung ist es, einen Flüssigkeitskreislauf zu schaffen, welcher eine erwärmte Flüssigkeit zumindest teilweise einem Filterelement zuführt, wobei der Flüssigkeitskreislauf übersichtlich und einfach zu montieren sein soll.

Diese Aufgebe wird durch die Merkmale des Patentanspruches 1 gelöst.

Der erfindungsgemäße Flüssigkeitskreislauf weist hierzu einen Flüssigkeitsspeicher, eine Flüssigkeitspumpe, ein Filterelement, einen Verbraucher und eine Steuereinheit auf, wobei das Filterelement und die Steuereinheit in ein; durch ein Gehäuse gebildetes Flüssigkeitsfiltersystem integriert sind. Hierbei können in das Gehäuse mehrere Teile, wie z.B. eine Filtereinheit mit einem Filterelement und eine Steuereinheit modulartig zusammengefügt sein und so das Flüssigkeitsfiltersystem bilden. Der Flüssigkeitsspeicher ist über eine Rohflüssigkeitsleitung mit einem, an dem Gehäuse fest angeordneten, Rohflüssigkeitseinlass verbunden. Die Flüssigkeitspumpe ist in dem Flüssigkeitskreislauf derart angeordnet, dass die Flüssigkeit in dem Flüssigkeitskreislauf zirkulieren kann. Das Filterelement besitzt eine Rohseite und eine Reinseite, wobei der Rohflüssigkeitseinlass mit der Rohseite des Filterelementes korrespondiert. Die Reinseite des Filterelementes korrespondiert mit einem Reinflüssigkeitsauslass, der ebenfalls gehäusefest angeordnet ist. An den Reinflüssigkeitsauslass schließt eine Reinflüssigkeitsleitung an, welche eine Flüssigkeit, z.B. Wasser, Emulsionen, Öl oder Kraftstoff, zu dem Verbraucher leitet.

Der Verbraucher entnimmt maximal einen Teil der Flüssigkeit, die ganze oder restliche Flüssigkeit wird über eine Flüssigkeitsrückleitung der Steuereinheit zugeführt, wobei die Flüssigkeitsrückleitung mit einem gehäusefesten Flüssigkeitsrücklauf verbunden ist. Die Flüssigkeit kann durch den Verbraucher oder andere umliegend angeordnete Komponenten, welche nicht unbedingt Teil des Flüssigkeitskreislaufes sind, erwärmt werden, wodurch die Flüssigkeitstemperatur der zurück geleiteten Flüssigkeit deutlich über der Flüssigkeitstemperatur in dem Flüssigkeitsspeicher liegen kann.

Die Steuereinheit besitzt eine Temperaturerfassungseinheit zur Ermittlung einer, in der Flüssigkeit herrschenden Flüssigkeitstemperatur und ein Ventil, welches entsprechend der Flüssigkeitstemperatur steuerbar ist. Die Flüssigkeitstemperatur ist vor dem Filterelement oder nach dem Filterelement erfasst. Sobald die Flüssigkeitstemperatur über einer definierten Temperatur liegt, leitet die Steuereinheit die Flüssigkeit über eine Flüssigkeitsableitung in den Flüssigkeitsspeicher zurück, wobei die Flüssigkeitsableitung mit einem gehäusefesten Flüssigkeitsauslass verbunden ist. Liegt die Flüssigkeitstemperatur unter der definierten Temperatur, so wird die, vom Verbraucher nicht entnommene Flüssigkeit über eine Verbindungsleitung von der Steuereinheit an das Filterelement zurückgeleitet. Dadurch wird die ungefilterte Flüssigkeit mit der zurückgeleiteten Flüssigkeit, welche eine höhere Flüssigkeitstemperatur besitzt, vermischt, wodurch die Viskosität der zu filternden Flüssigkeit abnimmt. Dadurch kann ein, von dem Filterelement erzeugter Durchflusswiderstand reduziert werden.

Soll nur ein Teil der nicht entnommenen Flüssigkeit dem Filterelement zugeführt werden, so ist ein Rückleitungsventil in der Verbindungsleitung vorzusehen, durch welches ein Teil der Flüssigkeit dem Filterelement und ein weiterer Teil der Flüssigkeit dem Flüssigkeitsspeicher zugeführt werden kann.

Der Verbraucher kann z.B. eine Einspritzanlage eine Brennkraftmaschine sein, welche nur einen Teil der Flüssigkeit z.B. Diesel-Kraftstoff verbraucht und den nicht verbrauchten Kraftstoff über eine Flüssigkeitsrückleitung der Steuereinheit zuführt. In diesem Fall wird der zuviel geförderte Kraftstoff über die Flüssigkeitsrückleitung der Steuereinheit zugeführt, welche temperaturabhängig den Kraftstoff dem Filterelement oder dem Flüssigkeitsspeicher zuführt. Liegt die Flüssigkeitstemperatur, welche nach dem Filterelement erfasst wird unter einer definierten Temperatur z.B. 20°C, so wir der zurückgeleitete Kraftstoff über die Verbindungsleitung dem Filterelement zugeführt, wodurch sich der kalte Kraftstoff aus dem Flüssigkeitsspeicher mit dem wärmeren Kraftstoff aus der Verbindungsleitung vermischt. Dadurch können Paraffine, welche im Kraftstoff enthalten sind und bei niedrigen Kraftstofftemperaturen das Filterelement verstopfen, gelöst werden.

Ein weiterer Verbraucher kann z.B. das Getriebe einer Brennkraftmaschine sein, welches mit einem Ölkreislauf verbunden ist. Der Ölkreislauf ist ein geschlossenes System, bei dem das Öl zur Reduzierung des Materialverschleißes dient. Je kälter das Öl ist, desto zähflüssiger ist es. Dies ist besonders beim Kaltstart einer Maschine nachteilig, da hier der Schmierfilm unterbrochen sein kann und dadurch ein erheblicher Verschleiß verursacht wird. Durch Vermischen des kalten Öles aus dem Flüssigkeitstank mit dem erwärmten zurückgeleiteten Öl, lässt sich die Viskosität des Öles senken und die Schmierung im kalten Zustand verbessern.

Eine vorteilhafte Ausführung der Erfindung sieht ein zweiteiliges Gehäuse vor, welches einen Deckel und einen Behälter aufweist, wobei der Deckel und der Behälter lösbar oder unlösbar miteinander verbunden sein können. Lösbare Verbindungen der beiden Gehäuseteile können z. B. durch Verschrauben oder Verschnappen erzeugt werden. Bei einer Verschraubung kann ein Gewinde an die Gehäuseteile angeformt sein oder es können Schrauben verwendet werden, die durch ein Gehäuseteil gesteckt und in das andere Teil eingeschraubt werden. Selbstverständlich können die Schrauben auch mit Muttern fixiert werden. Unlösbare Verbindungen der Gehäuseteile können z.B. durch Kleben, Schweißen oder Löten erzeugt werden.

Der Deckel und der Behälter kann bei dieser Ausführung z.B. aus Kunststoff oder Metall bestehen, wobei beide Teile aus dem selben oder einem anderen Material bestehen können. Hierbei sind Kombinationen von z.B. einem Behälter aus Metall und einem Deckel aus Kunststoff oder einem Behälter aus Kunststoff und einem Deckel aus Metall denkbar.

Gemäß einer weiteren Ausgestaltung der Erfindung ist die Temperaturerfassungseinheit mit dem Ventil mechanisch verbunden. Hierbei ist die Temperaturerfassungseinheit derart ausgestaltet, dass die Flüssigkeitstemperatur eine direkte Aktion, insbesondere eine Volumenänderung bei einem temperaturempfindlichen Stoff, bei der Temperaturerfassungseinheit auslöst. Die Temperaturerfassungseinheit kann z.B. durch ein Wachs-Dehn-Element gebildet werden. Sobald die Temperaturerfassungseinheit mit einer kalten Flüssigkeit in Kontakt kommt, zieht sich der temperaturempfindliche Stoff zusammen und das, mechanisch an die Temperaturerfassungseinheit gekoppelte Ventil öffnet die Verbindungsleitung, wodurch die zurückgeleitete Flüssigkeit dem Filterelement zugeführt wird. Ein Teil der zurückgeleiteten Flüssigkeit wird jedoch in den Flüssigkeitsspeicher geleitet, wodurch definierte Druckverhältnisse in dem Flüssigkeitskreislauf erzeugt werden.

Es ist vorteilhaft, eine Entlüftungsvorrichtung in dem Flüssigkeitsfiltersystem anzuordnen, wodurch Gase abgeschieden werden können. Diese Entlüftungsvorrichtung kann z.B. als Leckageleitung oder druckabhängiges Ventil ausgestaltet sein. Ist die Entlüftungsvorrichtung als Ventil ausgeführt, so kann es ab einem vordefinierten Druck selbsttätig öffnen und das Gas entweichen lassen. Die Entlüftungsvorrichtung ist vorzugsweise vor dem Filterelement angeordnet, da sich an dieser Stelle das Gas ansammelt. Bei einer besonderen Ausbildung der Entlüftungsvorrichtung ist das Ventil der Steuerungseinheit als Kolben ausgeführt, wobei der Kolben mit seinen Abmessungen und Toleranzen derart gestaltet ist, dass ein definiertes Kolbenspiel vorhanden ist, über welches die Entlüftung des Flüssigkeitsfiltersystem erfolgen kann.

Eine weitere Variante der Erfindung sieht eine Vorrichtung zur Entfernung einer abgeschiedenen Zweitflüssigkeit, insbesondere eine Wasserablassschraube in dem Flüssigkeitsfiltersystem vor. Die abgeschiedene Zweitflüssigkeit kann z.B. Wasser sein, welches aus Öl oder Kraftstoff abgeschieden ist.

Es ist vorteilhaft, eine Flüssigkeitsheizung in das Flüssigkeitsfiltersystem zu integrieren, wodurch die Flüssigkeit in dem Flüssigkeitskreislauf erwärmt werden kann. Diese Flüssigkeitsheizung kann an beliebigen Stellen angeordnet werden, wobei eine Anordnung in Durchflußrichtung vor dem Filterelement vorteilhaft ist. Hierbei kann zwischen zwei Ausführungen gewählt werden. Die erste Ausführung erwärmt ausschließlich die, aus dem Flüssigkeitsspeicher gepumpte Flüssigkeit. Anschließend wird die erwärmte Flüssigkeit aus dem Flüssigkeitsspeicher mit der zurückgeleiteten Flüssigkeit vor dem Filterelement vermischt. Bei der zweiten Ausführung wird zuerst die kalte Flüssigkeit aus dem Flüssigkeitsspeicher mit der zurückgeleiteten Flüssigkeit vermischt und anschließend von der Flüssigkeitsheizung erwärmt. Auch bei dieser Ausführung erfolgt die Erwärmung der Flüssigkeit vor dem Filterelement.

Eine weitere Ausgestaltung der Erfindung sieht eine, der Steuereinheit nachgeordnete Rücklaufsperre vor, welche z.B. durch ein Schirmventil gebildet werden kann. Diese Rücklaufsperre verhindert ein unkontrolliertes Leerlaufen des Flüssigkeitsfiltersystems und ist vorzugsweise zwischen der Steuereinheit und der Flüssigkeitsableitung angeordnet. Bei anderen Ausbildungen der Rücklaufsperre kann diese in die Flüssigkeitsableitung integriert sein, wodurch die Flüssigkeit nicht in den Flüssigkeitsspeicher ablaufen kann.

Gemäß einer weiteren Ausgestaltung der Erfindung ist ein Überdruckventil in das Flüssigkeitsfiltersystem integriert, welches insbesondere der Steuereinheit nachgeordnet ist. Das Überdruckventil ist derart ausgelegt, dass bei einem zu großen Flüssigkeitsdruck in dem Flüssigkeitskreislauf zumindest ein Teil der Flüssigkeit in den Flüssigkeitsspeicher abfließen kann, wodurch eine Beschädigung der, im Flüssigkeitskreislauf befindlichen Komponenten verhindert werden kann. Dieses Überdruckventil kann zwischen der Steuereinheit und der Flüssigkeitsableitung angeordnet sein. Hierbei stellt die Integration des Überdruckventils in den Flüssigkeitsauslass eine besondere Ausführung dar. Weiterhin kann das Überdruckventil mit der Rücklaufsperre in ein Bauteil zusammengefasst sein, wodurch die Montage erleichtert und Bauraum eingespart wird.

Es ist vorteilhaft, dass der Deckel auf dem Behälter mit Schrauben flüssigkeitsdicht befestigt ist. Hierbei können diese Gehäuseteile aus unterschiedlichen Materialien bestehen. Zur flüssigkeitsdichten Befestigung kann zwischen den Deckel und den Behälter eine Dichtung vorgesehen sein. Diese Dichtung kann fest mit einem der beiden Gehäuseteile verbunden oder lose dazwischen gelegt sein.

Gemäß einer weiteren Ausgestaltung der Erfindung ist das Flüssigkeitsfiltersystem in eine Kraftstoffeinspritzanlage einer dieselbetriebenen Brennkraftmaschine eingebracht. Hierbei ist die Flüssigkeit dann Dieselkraftstoff, welcher von einer Kraftstoffpumpe aus einem Kraftstofftank durch einen Kraftstofffilter zu Einspritzdüsen gepumpt wird. Die Kraftstoffpumpe fördert mehr Kraftstoff, als für den Betrieb der Brennkraftmaschine erforderlich ist. Der zuviel geförderte Kraftstoff wird an die Steuereinheit geleitet, von wo aus er temperaturabhängig entweder dem Kraftstofffilter oder dem Kraftstofftank zugeführt wird.

Diese und weitere Merkmale von bevorzugten Weiterbildungen der Erfindung gehen außer aus den Ansprüchen auch aus der Beschreibung und den Zeichnungen hervor.

Weitere Einzelheiten der Erfindung werden in den Zeichnungen anhand von schematischen Ausführungsbeispielen beschrieben.

Hierbei zeigt
- Figur 1: einen Flüssigkeitskreislauf,
- Figur 2: eine Steuereinheit im eingebauten Zustand im Schnitt,
- Figur 3: eine Steuereinheit im Schnitt,
- Figur 4: ein Flüssigkeitsfiltersystem in perspektivischer Ansicht und
- Figur 5: ein Flüssigkeitsfltersystem im Schnitt.

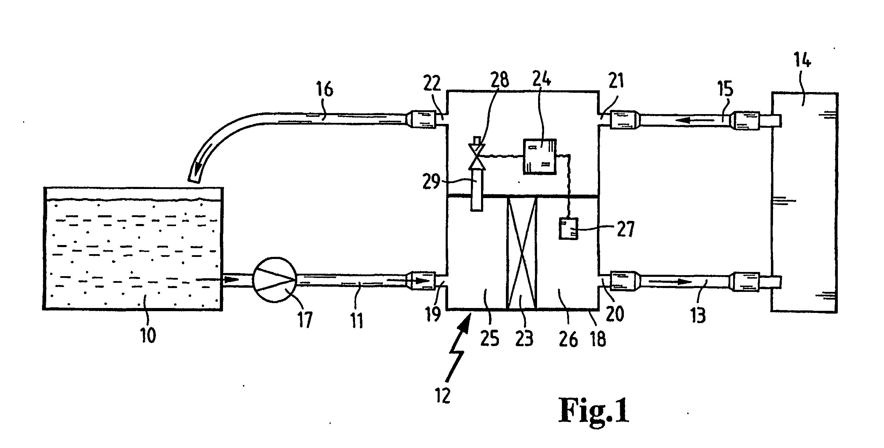

In Figur 1 ist ein Flüssigkeitskreislauf schematisch dargestellt. Der Flüssigkeüskreislauf wird durch einen Flüssigkeitsspeicher 10, eine von dem Flüssigkeitsspeicher 10 ausgehende Rohflüssigkeitsleitung 11, ein an die Rohflüssigkeitsleitung 11 anschließendes Flüssigkeitsfiltersystem 12, eine Reinflüssigkeitsleitung 13, welche einen Verbraucher 14 mit dem Flüssigkeitsfiltersystem 12 verbindet, eine Flüssigkeitsrückleitung 15 und eine Flüssigkeitsableitung 16 gebildet. Damit eine Flüssigkeit in dem Flüssigkeitskreislauf zirkulieren kann, ist eine Flüssigkeitspumpe 17 vorgesehen, welche einen Flüssigkeitsdruck in dem Flüssigkeitskreislauf erzeugt und ein größeres Fördervolumen besitzt, als der Verbraucher 14 maximal entnehmen kann. Die Flüssigkeitspumpe 17 ist bei diesem Ausführungsbeispiel in der Rohflüssigkeitsleitung angeordnet. Die Anordnung der Flüssigkeitspumpe 17 ist aber innerhalb des Flüssigkeitskreislaufes beliebig, wodurch eine Anordnung z.B. in dem Flüssigkeitsspeicher, dem Flüssigkeitsfiltersystem oder anderen flüssigkeitsführenden Leitungen möglich ist.

Das Flüssigkeitsfiltersystem 12 wird durch ein Gehäuse 18 gebildet, welches über einen gehäusefesten Rohflüssigkeitseinlass 19, einen gehäusefesten Reinflüssigkeitsauslass 20, einen gehäusefesten Flüssigkeitsrücklauf 21 und einen gehäusefesten Flüssigkeitsauslass 22 verfügt. In das Gehäuse 18 ist ein Filterelement 23 und eine Steuereinheit 24 integriert. Das Filterelement 23 besitzt eine Rohseite 25 und eine Reinseite 26, wobei beide Seiten dichtend voneinander getrennt sind. Der Rohflüssigkeitseinlass 19 korrespondiert mit der Rohseite 25 des Filterelementes 23 und ist über die Rohflüssigkeitsleitung 11 mit dem Flüssigkeitsspeicher 10 verbunden. Der Reinflüssigkeitsauslass 20 korrespondiert mit der Reinseite 26 des Filterelementes 23, wobei die Reinflüssigkeitsleitung 13 einerseits dicht mit dem Reinflüssigkeitsauslass 20 und andererseits dichtend mit dem Verbraucher 14 verbunden ist. Somit wird dem Verbraucher 14 gereinigte Flüssigkeit aus dem Flüssigkeitsspeicher 10 zugeführt.

Die von der Flüssigkeitspumpe 17 zuviel geförderte Flüssigkeit wird über eine Flüssigkeitsrückleitung 15, welche mit dem Flüssigkeitsrücklauf 21 verbunden ist, dem Flüssigkeitsfiltersystem 12 wieder zugeführt und von der Steuereinheit 24 in Abhängigkeit von einer, in der Flüssigkeit herrschenden Flüssigkeitstemperatur weitergeleitet. Zur Erfassung der Flüssigkeitstemperatur weist die Steuereinheit 24 eine Temperaturerfassungseinheit 27 auf, welche bei dieser Ausführung die Flüssigkeitstemperatur auf der Reinseite 26 des Filterelementes 23 erfasst. Die Erfassung der Flüssigkeitstemperatur kann jedoch in anderen Flüssigkeitsleitungen 11, 13 oder auf der Rohseite 25 des Filterelementes 23 erfolges. Weiterhin weist die Steuereinheit 24 ein Ventil 28 auf, welches eine Verbindungsleitung 29, welche einerseits mit dem Flüssigkeitsrücklauf 21 und andererseits mit der Rohseite 25 des Filterelementes 23 korrespondiert, entsprechend der Flüssigkeitstemperatur öffnet oder verschließt. Bei niedrigen Flüssigkeitstemperaturen, insbesondere unter 20°C, ist das Ventil 28 geöffnet, wodurch die, von der Flüssigkeitspumpe 17 zuviel geförderte Flüssigkeit zumindest teilweise über die Verbindungsleitung 29 der Rohseite 25 des Filterelementes 23 zugeführt wird. Die von der Flüssigkeitspumpe 17 zuviel geförderte Flüssigkeit weist eine etwas höhere Temperatur auf, als die im Flüssigkeitsspeicher befindliche Flüssigkeit. Die Temperaturerhöhung wird durch die Flüssigkeitspumpe 17 beim Erzeugen des Flüssigkeitsdruckes verursacht. Weiterhin kann eine Temperaturerhöhung auch von einer Wärmequelle wie z.B. einem speziellen Verbraucher oder anderen, um den Flüssigkeitskreislauf angeordneten Komponenten verursacht werden. Die, aus dem Flüssigkeitsspeicher 10 geförderte Flüssigkeit vermischt sich mit der, durch die Verbindungsleitung 29 zugeführte Flüssigkeit, bevor sie das Filterelement 23 durchströmen.

Sobald die Flüssigkeitstemperatur über der definierten Temperatur liegt, wird die zuviel geförderte Flüssigkeit in den Flüssigkeitsspeicher 10 geleitet, wobei ein Flüssigkeitskühler (nicht dargestellt) an der Flüssigkeitsableitung 16 angeordnet sein kann, wodurch die Flüssigkeit in dem Flüssigkeitsspeicher 10 nicht über eine kritische Flüssigkeitstemperatur erwärmt wird.

Um ein Leerlaufen der Reinflüssigkeitsleitung 13 und somit eine Unterversorgung des Verbrauchers zu verhindern, kann ein Rücklaufsperrventil (nicht dargestellt) in der Reinflüssigkeitsleitung 13 angeordnet sein. Weiterhin kann bei einer besonderen Ausführung ein Überdruckventil (nicht dargestellt) vorgesehen sein, welches die Reinflüssigkeitsleitung 13 mit der Verbindungsleitung 29 oder der Flüssigkeitsableitung 16 verbindet, wodurch ein zu großer Flüssigkeitsdruck abgebaut werden kann und somit der Verbraucher 14 nicht beschädigt wird.

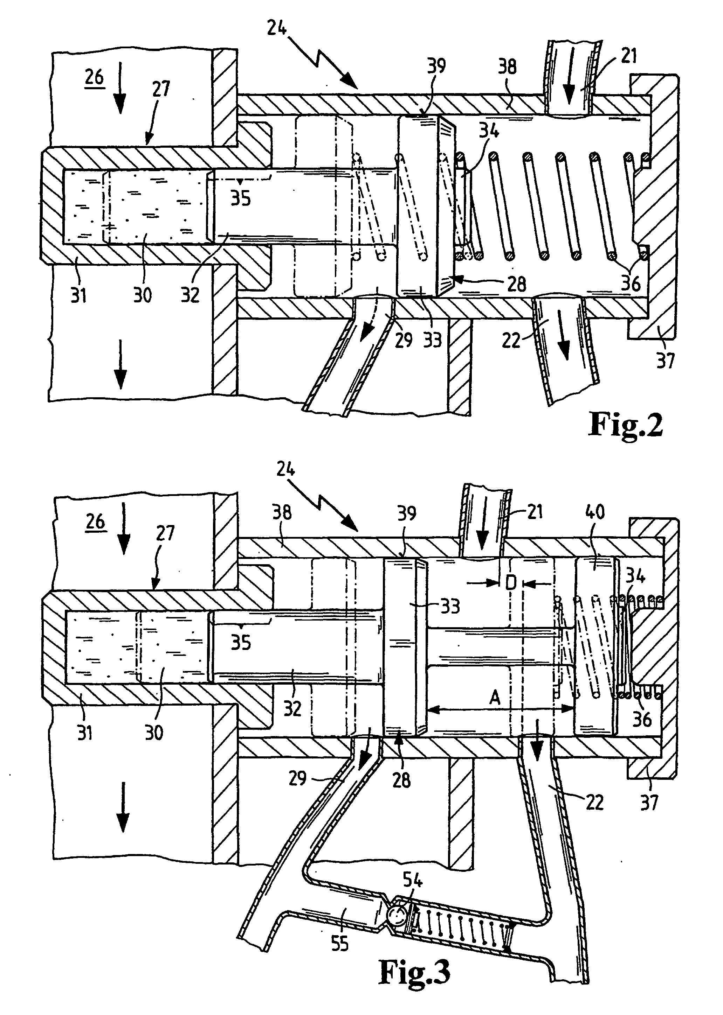

In Figur 2 ist eine Steuereinheit 24 im eingebauten Zustand im Schnitt dargestellt. Bei diesem Ausführungsbeispiel ist die Temperaturerfassungseinheit 27 mechanisch mit dem Ventil 28 verbunden. Die Temperaturerfassungseinheit 27 wird durch eine, teilweise mit einem temperaturempfindlichen Stoff 30 gefüllten Buchse 31 gebildet, wobei die Buchse 31 aus einem Werkstoff besteht, welcher eine gute Temperaturleitfähigkeit aufweist. Damit die Flüssigkeitstemperatur an den temperaturempfindlichen Stoff weitergeleitet wird, steht die Buchse 31 mit der Flüssigkeit in Kontakt. Ist die Flüssigkeitstemperatur kalt, so zieht sich der temperaturempfindliche Stoff 30 zusammen. Bei einer hohen Flüssigkeitstemperatur dehnt sich der temperaturempfindliche Stoff 30 aus.

Das Ventil 28 wird durch eine Kolbenstange 32, einen Kolben 33 und eine Federführung 34 gebildet. Die Kolbenstange 32 ist vorzugsweise zylindrisch ausgeführt, es sind aber auch anders ausgebildete wie z.B. quaderförmige Kolbenstangen 32 denkbar. Die Kolbenstange 32 ist in die, mit dem temperaturempfindlichen Stoff 30 gefüllte Buchse 31 hineingesteckt, wobei darauf zu achten ist, dass die Kolbenstange 32 leichtgängig ist, jedoch der temperaturempfindliche Stoff 30 beim Ausdehnen nicht zwischen der Kolbenstange 32 und der Buchse 31 austreten kann. Beim Ausdehnen des temperaturempfindlichen Stoffes 30 muss die Kolbenstange 32 zumindest teilweise aus der Buchse 31 herausgeschoben werden, wobei es vorteilhaft ist, wenn ein Teil der Kolbenstange 32 in der Buchse verbleibt, wodurch die Kolbenstange 32 einen Führungsbereich 35 erhält, welcher ein Verkanten der Kolbenstange 32 beim Einschieben in die Buchse 31 verhindert. Beim Zusammenziehen des temperaturempfindlichen Stoffes 30 wird die Kolbenstange 32 mit einer Feder 36, welche zwischen dem Kolben 33 und einem Verschluss 37 eingespannt ist, in die Buchse 31 gedrückt. Die Feder 36 ist mit einer geringen Vorspannung in eine Ventilaufnahme 38, welche gemeinsam mit dem Verschluss 37 die Außenkontur der die Steuereinheit 24 bildet, eingebracht, so dass der temperaturempfindliche Stoff 30 die Kolbenstange 32 noch verschieben kann. Der Verschluss 37 kann lösbar oder unlösbar mit der Ventilaufnahme 38 verbunden sein.

Der Kolben 33 ist zylindrisch ausgeführt und besitzt eine Umfangsfläche 39,welche in der Ventilaufnahme 38 geführt ist. Der Kolben 33 ist derart zu der Ventilaufnahme 38 toleriert, dass kein bzw. nur ein geringer Leckagestrom auftreten kann.

Bei diesem Ausführungsbeispiel wird die Steuereinheit 24 von der Flüssigkeit durchströmt. Die Flüssigkeit gelangt von dem Flüssigkeitsrücklauf 21 in die Steuerungseinheit 24. Liegt die Flüssigkeitstemperatur über einer definierten Temperatur, so ist der temperaturempfindliche Stoff 30 ausgedehnt und die Kolbenstange 32 ragt weit aus der Buchse 31 heraus, wodurch sich der Kolben 33 in einer Endlage befindet, bei welcher die Verbindungsleitung 29 verschlossen ist und die Flüssigkeit in den Flüssigkeitsauslass 22 geleitet wird. Bei einer Flüssigkeitstemperatur unterhalb einer definierten Temperatur, hat sich der temperaturempfindliche Stoff 30 zusammengezogen und die Kolbenstange 32 ragt nur noch wenig aus der Buchse 31 heraus. In dieser Schaltstellung (strich-punktiert dargestellt) befindet sich der Kolben 33 in einer zweiten Endlage, in welcher er die Verbindungsleitung 29 frei gibt und die Flüssigkeit somit durch den Flüssigkeitsauslass 22 und die Verbindungsleitung 29 strömen kann. An dem Flüssigkeitsauslass 22 und/oder der Verbindungsleitung 29 können Drosseln (nicht dargestellt) vorgesehen sein, welche den Durchfluss der Flüssigkeit steuern, je nachdem wo mehr Flüssigkeit hin strömen soll. Der Flüssigkeitsrücklauf 21 und der Flüssigkeitsauslass 22 können derart angeordnet sein, dass sie einander gegenüber liegen oder in einem Winkel zueinander angeordnet sind. Der Flüssigkeitsrücklauf 21 kann aber auch in einer Ebene versetzt zu dem Flüssigkeitsauslass 22 angeordnet sein. Die Verbindungsleitung 29 ist derart angeordnet, dass der Kolben 33 bei höheren Flüssigkeitstemperaturen die Verbindungsleitung verschließt und bei niedrigeren Flüssigkeitstemperaturen frei gibt.

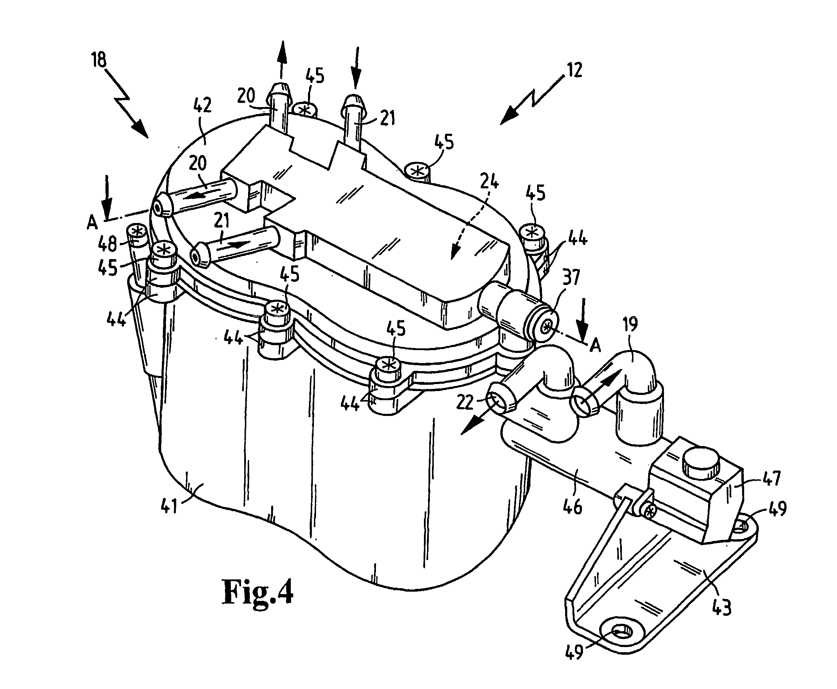

In Figur 3 ist eine Steuereinheit 24 im Schnitt dargestellt. Diese Steuereinheit 24 entspricht im wesentlichen Figur 2, wobei jedoch das Ventil 28 und die Lage des Flüssigkeitsrücklauf 21 und des Flüssigkeitsauslasses 22 modifiziert sind. Die Lage des Flüssigkeitsrücklaufes 21 zu dem Flüssigkeitsauslass 22 ist derart gewählt, dass eine Distanz D dazwischen liegt. Das Ventil 28 weist bei dieser Ausführung einen Verschlusskolben 40 auf, welcher in einem Abstand A zu dem Kolben 33 angeordnet ist. Der Abstand A und die Distanz D sind derart aufeinander abgestimmt, dass das Ventil 28 in einer ersten Endlage den Flüssigkeitsrücklauf 21 und den Flüssigkeitsauslass 22 frei gibt und die Verbindungsleitung 29 mit dem Kolben 28 verschließt und in einer zweiten Endlage (strichpunktiert dargestellt) den Flüssigkeitsrücklauf 21 und die Verbindungsleitung 29 frei gibt, aber den Flüssigkeitsauslass 22 mit dem Verschlusskolben 40 verschließt.

Damit bei der zweiten Endlage (strichpunktiert dargestellt) kein zu großer Flüssigkeitsdruck, welcher das Filterelement z.B. beschädigen kann, auf das Filterelement 23 wirkt, ist ein Überdruckventil 54 vorgesehen. Das Überdruckventil 54 ist in einer Überdruckleitung 55, welche die Verbindungsleitung 29 mit dem Flüssigkeitsauslass 22 verbindet, angeordnet. Sobald der Flüssigkeitsdruck in der Verbindungsleitung 29 einen definierten Flüssigkeitsdruck, insbesondere 1 bar, überschreitet, öffnet das Überdruckventil 54 die Überdruckleitung 55, wodurch die Flüssigkeit in den Flüssigkeitsauslass 22 abfliegen kann. Nachdem der Flüssigkeitsdruck unter den definierten Flüssigkeitsdruck abgesunken ist, schießt das Überdruckventil 54 wieder und die Flüssigkeit wird nur durch die Verbindungsleitung 29 geleitet.

In Figur 4 ist ein Flüssigkeitsfiltersystem 12 in perspektivischer Ansicht dargestellt, welches insbesondere in einer Kraftstoffeinspritzanlage eines V-Motors angeordnet werden kann. Das Flüssigkeitsfiltersystem 12 wird im wesentlichen durch ein Gehäuse 18 und eine Halterung 43 gebildet. Das Gehäuse 18 weist einen Behälter 41 und einen Deckel 42 auf, wobei der Deckel 42 und der Behälter 41 ausgeformte Befestigungsbereiche 44 besitzen, welche mit Schrauben 45 aufeinander fixiert sind. Bei diesem Ausführungsbeispiel ist der Rohflüssigkeitseinlass 19 und der Flüssigkeitsauslass 22 an dem Behälter 41 angeordnet, welche als Einsteckteil mit einer Presspassung in den Behälter 41 eingesteckt und dichtend verklebt sind. Der Rohflüssigkeitseinlass 19 mündet in ein Flüssigkeitsrohr 46, in welchem eine Flüssigkeitsheizung 47 angeordnet ist, welche die eintretende Flüssigkeit, bei einer Flüssigkeitstemperatur unterhalb eines definierten Wertes, erwärmen kann. Der Flüssigkeitsauslass 22 kann mit der Flüssigkeitsleitung 16 (nicht dargestellt) gemäß Figur 1 mit dem Flüssigkeitsspeicher 10 (nicht dargestellt) verbunden werden.

Dieses Ausführungsbeispiel weist zwei Reinflüssigkeitsauslässe 20 und zwei Flüssigkeitsrückläufe 21 auf, welche in den Deckel 42 integriert sind und als Einsteckteile mit dem Deckel 42 dichtend verklebt sind. Dadurch können zwei Verbraucher 14 (nicht dargestellt) parallel geschaltet sein. Um mehrere Verbraucher 14 mit dem Flüssigkeitsfiltersystem 12 zu verbinden ist eine entsprechende Anzahl an Reinflüssigkeitsauslässen 20 und Flüssigkeitsrückläufen 21 vorzusehen, wobei jedoch die Leistung der Flüssigkeitspumpe 17 (nicht dargestellt) entsprechend ausgelegt sein muss. Weiterhin ist die Steuereinheit 24 (nicht dargestellt) mit dem Ventil 28 (nicht dargestellt) und der Temperaturerfassungseinheit 27 (nicht dargestellt) in den Deckel 42 integriert und mit dem Verschluss 37 im Deckel 42 befestigt.

Dieses Flüssigkeitsfiltersystem 12 besitzt eine Wasserablassschraube 48 mit welcher Wasser oder eine andere abgeschiedene Flüssigkeit, welche sich in dem Behälter 41 abgesetzt hat, aus dem Flüssigkeitsfiltersystem 12 abgelassen werden kann. Idealerweise ist ein Sensor (nicht dargestellt) im unteren Bereich des Flüssigkeitsfiltersystems 12 angeordnet, welcher die abgeschiedene Flüssigkeit sensiert und mit einem Signal ein Ablassen der abgeschiedenen Flüssigkeit automatisch oder manuell herbeiführt. Dieser Sensor (nicht dargestellt) kann derart ausgebildet sein, dass er zusätzlich noch einen, in dem Flüssigkeitsfiltersystem 12 herrschenden Flüssigkeitsdruck erfasst.

Der Halter 43 ist an dem Flüssigkeitsrohr 46 befestigt. Die Befestigung des Halters 43 ist aber auch an anderen Stellen des Gehäuses 18 möglich. Zur Befestigung des Flüssigkeitsfiltersystems 12 an hierzu vorgesehenen Elementen (nicht dargestellt) weist der Halter 43 zwei Bohrungen 49 auf, durch welche Befestigungsschrauben (nicht dargestellt) hindurch gesteckt werden können und mit den vorgesehenen Elementen (nicht dargestellt) verschraubt werden können, wobei dämpfende Komponenten (nicht dargestellt) wie z.B. Gummielemente verwendet werden können. Weiterhin können an dem Behälter 41 weitere Befestigungspunkte (nicht dargestellt) vorgesehen sein, welche in entsprechende Aufnahmen (nicht dargestellt) unter Verwendung von dämpfenden Komponenten eingesteckt werden können.

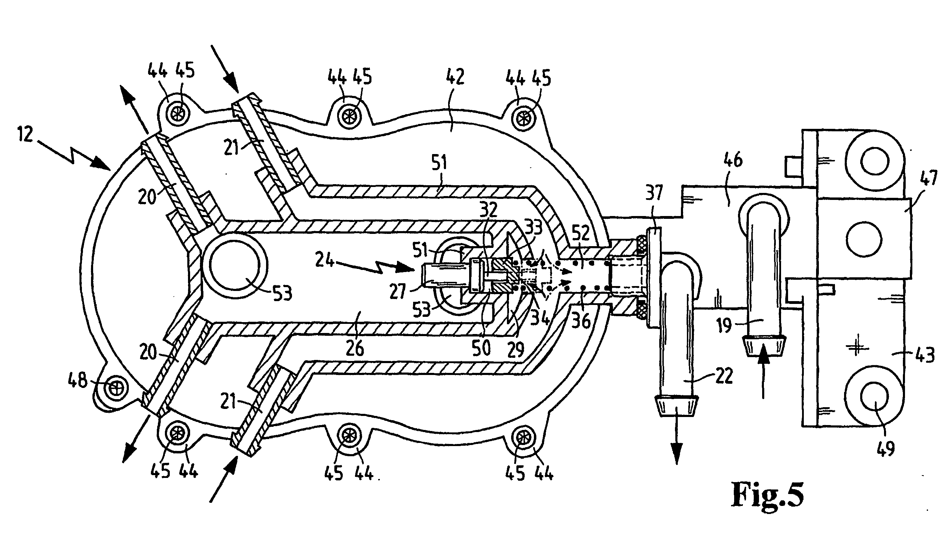

In Figur 5 ist ein Flüssigkeitsfiltersystem 12 im Schnitt entlang der Schnittlinie A-A gemäß Figur 4 dargestellt. Dieser Schnitt A-A verläuft mittig durch den Reinflüssigkeitsauslass 20, den Flüssigkeitsrücklauf 21 und die Steuereinheit 24, wodurch von dem Deckel 42 die obere Hälfte fehlt. Die Steuereinheit 24 ist in den Deckel 42 integriert, welcher derart ausgebildet ist, dass er Wände 51 aufweist, welche die Flüssigkeit in gewünschte Bahnen leitet. Die Temperaturerfassungseinheit 27 steht mit der Flüssigkeit auf der Reinseite 26 in Kontakt. Der Kolben 34 ist in seiner Endlage im kalten Zustand dargestellt, wobei er sich in einer Aufnahme 50 befindet, welche durch Wände 51 des Deckels gebildet wird, und dadurch die Verbindungsleitung 29 freigibt. Dadurch kann die nicht verbrauchte und durch den Flüssigkeitsrücklauf 21 zurück geleitete Flüssigkeit in die Verbindungsleitung 29 und somit auf die Rohseite 25 des Filterelementes 23 (nicht dargestellt) gelangen. Ein weiterer Teil der Flüssigkeit wird über eine Auslassleitung 52 dem Flüssigkeitsauslass 22 zugeführt, da dieser nicht verschlossen ist.

Bei diesem Ausführungsbeispiel wird das Filterelement 23 (nicht dargestellt) durch zwei Rundfilterpatronen gebildet, welche unterhalb zweier Auslässe 53 im Behälter 41 (nicht dargestellt) gemäß Figur 4 angeordnet sind.

Liegt die Flüssigkeitstemperatur oberhalb einer definierten Temperatur, so befindet sich der Kolben 33 in seiner Endlage im warmen Zustand (strichpunktiert dargestellt). In dieser Stellung verschließt der Kolben 33 die Verbindungsleitung, wodurch die zurück geleitete Flüssigkeit durch die Auslassleitung 52 dem Flüssigkeitsauslass 22 zugeführt wird.

## Patentansprüche

1. Flüssigkeitskreislauf, insbesondere eine Kraftstoffeinspritzanlage mit einer Kraftstoffrückführung, aufweisend einen Flüssigkeitsspeicher (10), eine Flüssigkeitspumpe (17), einen Verbraucher (14), ein Filterelement (23) mit einer Rohseite (25) und einer Reinseite (26) und eine Steuereinheit (24), wobei die Steuereinheit (24) eine Temperaturerfassungseinheit (27) zur Ermittlung einer Flüssigkeitstemperatur einer Flüssigkeit in dem Flüssigkeitskreislauf aufweist, wobei mit der Flüssigkeitstemperatur ein, in der Steuereinheit (24) enthaltenes Ventil (28) steuerbar ist, wodurch die, durch den Verbraucher (14) nicht entnommene, Flüssigkeit zumindest teilweise dem Filterelement (23) wieder zuführbar ist, wobei
das Filterelement (23) und die Steuereinheit (24) in ein Flüssigkeitsfiltersystem (12) integriert sind, welches durch ein Gehäuse (18) gebildet ist und über einen Rohflüssigkeitseinlass (19), einen Reinflüssigkeitsauslass (20), einen Flüssigkeitsrücklauf (21) und einen Flüssigkeitsauslass (22) verfügt, wobei
- der gehäusefeste Rohflüssigkeüseinlass (19), welcher korrespondierend mit der Rohseite (25) des Filterelementes (23) verbunden ist, über eine Rohflüssigkeitsleitung (11) mit dem Flüssigkeitsspeicher (10) verbunden ist,
- der gehäusefeste Reinflüssigkeitsauslass (20), welcher korrespondierend mit der Reinseite (26) des Filterelementes (23) verbunden ist, über eine Reinflüssigkeitsleitung (13) mit dem Verbraucher (14) verbunden ist,
- der gehäusefeste Flüssigkeitsrücklauf (21), welcher korrespondierend mit der Steuereinheit (24) verbunden ist und über eine Flüssigkeitsrückleitung (15) mit dem Verbraucher (14) verbunden ist, und
- der gehäusefeste Flüssigkeitsauslass (22), welcher korrespondierend mit der Steuereinheit (24) verbunden ist, über eine Flüssigkeitsableitung (16) mit dem Flüssigkeitsspeicher (10) verbunden ist, und
- wobei die Steuereinheit (24) über eine Verbindungsleitung (29) mit der Rohseite (25) des Filterelementes (23) verbunden ist, **dadurch gekennzeichnet, dass**
- wobei die Temperaturerfassungseinheit (27) flussabwärts zwischen dem Flüssigkeitsspeicher (10) und dem Verbraucher (14), insbesondere auf der Rohseite (25), der Reinseite (26) des Filterelementes oder in den Flüssigkeitsleitungen (11, 13), angeordnet ist.

2. Flüssigkeitskreislauf nach Anspruch 1, **dadurch gekennzeichnet, dass** das Gehäuse (18) zweiteilig ausgeführt ist und einen Behälter (41) und einen Deckel (42) aufweist, wobei die Steuereinheit (24) in dem Deckel (42) und das Filterelement (23) in dem Behälter (41) angeordnet ist.

3. Flüssigkeitskreislauf nach einem der Ansprüche 1 oder 2, **dadurch gekennzeichnet, dass** die Temperaturerfassungseinheit (27) mit dem Ventil (28) mechanisch verbunden ist.

4. Flüssigkeitskreislauf nach einem der vorangehenden Ansprüche, **dadurch gekennzeichnet, dass** in dem Flüssigkeitsfiltersystem (12) eine Entlüftungsvorrichtung angeordnet ist.

5. Flüssigkeitskreislauf nach einem der vorangehenden Ansprüche, **dadurch gekennzeichnet, dass** eine Vorrichtung zur Entfernung einer abgeschiedenen Zweiflüssigkeit, insbesondere eine Wasserablassschraube (48), in dem Flüssigkeitsfiltersystem (12) vorgesehen ist.

6. Flüssigkeitskreislauf nach einem der vorangehenden Ansprüche, **dadurch gekennzeichnet, dass** eine Flüssigkeitsheizung (47) in das Flüssigkeitsfiltersystem (12) integriert ist.

7. Flüssigkeitskreislauf nach einem der vorangehenden Ansprüchen, **dadurch gekennzeichnet, dass** der Steuereinheit (24) eine Rücklaufsperre , insbesondere ein Rücklaufsperrventil, nachgeordnet ist.

8. Flüssigkeitskreislauf nach einem der vorangehenden Ansprüchen, **dadurch gekennzeichnet, dass** in dem Flüssigkeitsfiltersystem (12) ein Überdruckventil (54) angeordnet ist, welches insbesondere der Steuereinheit (24) nachgeordnet ist.

9. Flüssigkeitskreislauf nach einem der vorangehenden Ansprüche, **dadurch gekennzeichnet, dass** der Deckel (42) mit Schrauben (45) auf dem Behälter (41) flüssigkeitsdicht befestigt ist.

10. Flüssigkeitskreislauf nach einem der vorangehenden Ansprüche, **dadurch gekennzeichnet, dass** das Flüssigkeitsfiltersystem (12) in einer Kräftstoffeinspritzanlage einer dieselbetriebenen Brennkraftmaschine eingebracht ist.

## Claims

1. Liquid circuit, more especially a fuel injection system with fuel recirculation, the said liquid circuit including a liquid storage means (10), a liquid pump (17), a consumer (14), a filter element (23) with an unfiltered side (25) and a filtered side (26) and a control unit (24), wherein the control unit (24) includes a temperature detecting unit (27) for determining a liquid temperature of a liquid in the liquid circuit, wherein a valve (28), which is contained in the control unit (24), is controllable by means of the liquid temperature, the liquid, not removed by the consumer (14), being suppliable thereby at least partially back to the filter element (23), wherein
the filter element (23) and the control unit (24) are incorporated in a liquid filter system (12), which is formed by a housing (18) and has an unfiltered liquid inlet (19), a filtered liquid outlet (20), a liquid return (21) and a liquid outlet (22), wherein
- the unfiltered liquid inlet (19), which is secured to the housing and is correspondingly connected to the unfiltered side (25) of the filter element (23), is connected to the liquid storage means (10) via an unfiltered liquid pipe (11),
- the filtered liquid outlet (20), which is secured to the housing and is correspondingly connected to the filtered side (26) of the filter element (23), is connected to the consumer (14) via a filtered liquid pipe (13),
- the liquid retum (21), which is secured to the housing and is correspondingly connected to the control unit (24), is connected to the consumer (14) via a liquid retum pipe (15), and
- the liquid outlet (22), which is secured to the housing and is correspondingly connected to the control unit (24), is connected to the liquid storage means (10) via a liquid outlet pipe (16), and
- wherein the control unit (24) is connected to the unfiltered side (25) of the filter element (23) via a connecting pipe (29), **characterised in that** the temperature detecting unit (27) is disposed downstream between the liquid storage means (10) and the consumer (14), more especially on the unfiltered side (25), the filtered side (26) of the filter element or in the liquid lines (11, 13).

2. Liquid circuit according to claim 1, **characterised in that** the housing (18) is in two parts and includes a container (41) and a cover (42), wherein the control unit (24) is disposed in the cover (42) and the filter element (23) is disposed in the container (41).

3. Liquid circuit according to one of claims 1 or 2, **characterised in that** the temperature detecting unit (27) is mechanically connected to the valve (28).

4. Liquid circuit according to one of the preceding claims, **characterised in that** a ventilating apparatus is disposed in the liquid filter system (12).

5. Liquid circuit according to one of the preceding claims, **characterised in that** an apparatus for removing a separated second liquid, more especially a water drain plug (48), is provided in the liquid filter system (12).

6. Liquid circuit according to one of the preceding claims, **characterised in that** a liquid heating means (47) is in incorporated in the liquid filter system (12).

7. Liquid circuit according to one of the preceding claims, **characterised in that** the control unit (24) is connected downstream of a non-return means, more especially a non-return valve.

8. Liquid circuit according to one of the preceding claims, **characterised in that** in the liquid filter system (12) there is provided an pressure-relief valve (54), which is connected more especially downstream of the control unit (24).

9. Liquid circuit according to one of the preceding claims, **characterised in that** the cover (42) is secured with screws (45) on the container (41) so as to be sealed against liquid.

10. Liquid circuit according to one of the preceding claims, **characterised in that** the liquid filter system (12) is mounted in a fuel injection system of a diesel-driven internal combustion engine.

## Revendications

1. Circuit hydraulique, notamment système d'injection de carburant équipé d'un retour de carburant comprenant un réservoir (10), une pompe (17), un utilisateur (14), un élément de filtre (23) avec un côté d'entrée (25) et un côté de sortie (26) ainsi qu'une unité de commande (24),
l'unité de commande (24) ayant un capteur de température (27) pour déterminer la température du liquide du circuit,
la température du liquide commandant une vanne (28) de l'unité de commande (24) de façon à retourner le liquide non prélevé par l'utilisateur (14) au moins en partie dans l'élément de filtre (23),
l'élément de filtre (23) et l'unité de commande (24) étant intégrés dans un système de filtre à liquide (12) constitué par un boîtier (18) et comportant une entrée de liquide non filtré (19), une sortie de liquide filtré (20), un retour de liquide (21) et une sortie de liquide (22),
- l'entrée de liquide non filtré (19), solidaire du boîtier, étant reliée de façon correspondante au côté d'entrée (25) de l'élément de filtre (23) par une conduite de liquide non filtré (11) au réservoir (10),
- la sortie de liquide filtré (20), solidaire du boîtier, reliée de façon correspondante au côté de sortie (26) de l'élément de filtre (23) étant reliée à l'utilisateur (14) par une conduite de liquide filtré (13),
- le retour de liquide (21) solidaire du boîtier, relié de façon correspondante à l'unité de commande (24), étant relié par une conduite de retour de liquide (15) à l'utilisateur (14) et
- la sortie de liquide (22) solidaire du boîtier, reliée de manière correspondante à l'unité de commande (24) est reliée par une conduite de sortie de liquide (16) au réservoir (10) et
- l'unité de commande (24) est reliée par une conduite de liaison (29) au côté d'entrée (25) de l'élément de filtre (23),
**caractérisé en ce que**
le capteur de température (27) est installé en aval entre le réservoir (10) et l'utilisateur (14) notamment du côté d'entrée (25), du côté de sortie (26) de l'élément de filtre ou dans les conduites (11, 13).

2. Circuit hydraulique selon la revendication 1,
**caractérisé en ce que**
le boîtier (18) est formé de deux parties comprenant un réceptacle (41) et un couvercle (42),
l'unité de commande (24) étant installée dans le couvercle (42) et l'élément de filtre (23) dans le réservoir (41).

3. Circuit hydraulique selon l'une des revendications 1 ou 2,
**caractérisé en ce que**
le capteur de température (27) est relié mécaniquement à la vanne (28).

4. Circuit hydraulique selon l'une quelconque des revendications précédentes,
**caractérisé par**
un dispositif d'évacuation d'air dans le système de filtre (12).

5. Circuit hydraulique selon l'une quelconque des revendications précédentes,
**caractérisé par**
un dispositif pour évacuer un second liquide, séparé, notamment une vis de purge d'eau (48) équipant le système de filtre à liquide (12).

6. Circuit hydraulique selon l'une quelconque des revendications précédentes,
**caractérisé en ce qu'**
un moyen de chauffage de liquide (47) est intégré dans le système de filtre à liquide (12).

7. Circuit hydraulique selon l'une quelconque des revendications précédentes,
**caractérisé en ce que**
l'unité de commande (24) est suivie d'un dispositif anti-retour, notamment d'un clapet anti-retour.

8. Circuit hydraulique selon l'une quelconque des revendications précédentes,
**caractérisé par**
une soupape de surpression (54) dans le système de filtre à liquide (12), cette soupape étant notamment en aval de l'unité de commande (24).

9. Circuit hydraulique selon l'une quelconque des revendications précédentes,
**caractérisé en ce que**
le couvercle (42) est fixé de manière étanche au liquide au réceptacle (41) par des vis (45).

10. Circuit hydraulique selon l'une quelconque des revendications précédentes,
**caractérisé en ce que**
le système de filtre à liquide (12) est installé dans une installation d'injection de carburant d'un moteur à combustion interne Diesel.
